(19) Europäisches Patentamt
European Patent Office
Office européen des brevets

(11) **EP 0 554 512 B1**

(12) **EUROPÄISCHE PATENTSCHRIFT**

(45) Veröffentlichungstag und Bekanntmachung des Hinweises auf die Patenterteilung:
**04.06.1997  Patentblatt 1997/23**

(51) Int Cl.[6]: **G01S 13/28**

(21) Anmeldenummer: **92116147.7**

(22) Anmeldetag: **22.09.1992**

(54) **Verfahren zur Erkennung eines Zieles**

Method for recognition of a target

Méthode de reconnaissance de cible

(84) Benannte Vertragsstaaten:
**DE FR GB SE**

(30) Priorität: **07.02.1992  DE 4203453**
**12.09.1992  DE 4230558**

(43) Veröffentlichungstag der Anmeldung:
**11.08.1993  Patentblatt 1993/32**

(73) Patentinhaber: **Daimler-Benz Aerospace Aktiengesellschaft**
**81663 München (DE)**

(72) Erfinder:
• **Hofele, Franz-Xavier, Dipl.-Math.**
**W-7322 Donzdorf (DE)**
• **Minker, Manfred, Dipl.-Ing.**
**W-7900 Ulm (DE)**

(74) Vertreter: **Schulze, Harald Rudolf, Dipl.-Ing. et al**
**Daimler-Benz Aerospace AG**
**Patentabteilung**
**Sedanstrasse 10**
**89077 Ulm (DE)**

(56) Entgegenhaltungen:
**EP-A- 0 336 272        EP-A- 0 422 479**
**US-H- 767**

• **6TH MEDITERRANEAN ELECTROTECHNICAL CONFERENCE PROCEEDINGS, Ljubljana, Slovenia, 22. - 24. Mai 1991, Band 1, Seiten 480-483, IEEE, New York, US; A. ZEJAK et al. : "Doppler optimized sidelobe suppression in phase-coded pulse compression radars**
• **ELECTRONICS LETTERS, Band 27, Nr. 7, 28. März 1991, Seiten 558-560, Stevenage, Herts, GB; A.J. ZEJAK et al.: "Doppler optimised mismatched filters"**
• **CONFERENCE RECORD OF THE 22. ASILOMAR CONFERENCE ON SIGNAL, SYSTEMS & COMPUTERS, Pacific Grove, California, 31. Oktober - 2. November 1988, Band 1, Seiten 663-667, Maple Press; F.F. KRETSCHMER, Jr. et al.: "Low sidelobe pulse compression waveforms"**

**Beschreibung**

Die Erfindung betrifft ein Verfahren zur Erkennung eines Zieles nach dem Oberbegriff des Patentanspruchs 1.

Um bei einer Radaranlage eine gute Entfernungsauflösung für ein oder mehrere Ziele zu erhalten, wird von der Radarantenne ein intrapulsmoduliertes Sendesignal ausgesandt, das z.B. entsprechend einem Binärcode moduliert wird. Das an einem Ziel reflektierte und dann empfangene zugehörige aperiodische intrapulsmodulierte Empfangssignal wird in den Videobereich umgesetzt und anschließend mit Hilfe eines Pulskompressions-Filter in einen bezüglich des Empfangssignales zeitlich komprimierten Ausgangsimpuls umgewandelt, der dann weiterverarbeitet und ausgewertet werden kann, z.B. mit Hilfe des CFAR-Verfahrens (CFAR = $\underline{C}$onstant $\underline{F}$alse $\underline{A}$larm $\underline{R}$ate).

Diese Pulskompression ist - mathematisch beschrieben - eine Faltung des im Videobereich vorliegenden Empfangssignales s(t), wobei t die Zeit bedeutet, mit einer zeitabhängigen Impulsantwort-Funktion h(t), durch welche das Pulskompressions-Filter beschrieben wird. Als Ergebnis dieser Faltung entsteht ein ebenfalls zeitabhängiges Ausgangssignal y(t) gemäß der Formel

$$s(-t) * h(t) = y(t) \qquad (1),$$

wobei $*$ den Faltungsoperator bedeutet.

Es ist zweckmäßig, das Pulskompressions-Filter so zu gestalten, daß die zugehörige Impulsantwort-Funktion h(t) gleich dem zeitinvertierten, konjugiert komplexen Sendesignal im Videobereich ist. Ein solches Pulskompressions-Filter wird auch Matched-Filter (MF) genannt. Damit ist für das Ausgangssignal y(t) ein größtmöglicher Signal - zu Rauschabstand (S/N) erreichbar und eine Optimierung bezüglich der Dauer des zeitlich komprimierten (Haupt-) Pulses (Mainlobe). Weiterhin haben die zu dem Matched-Filter gehörende Impulsantwort-Funktion h(t) und das unkomprimierte Empfangssignal s(t) eine gleiche zeitliche Länge. Ein solches Matched-Filter hat jedoch den Nachteil, daß zeitlich benachbart zu dem (Haupt-)Puls (Mainlobe) bezogen auf diesen relativ hohe zeitliche Nebenzipfel (Nebenpulse oder auch Sidelobes genannt) auftreten. Diese Nebenzipfel können bei dem eingangs erwähnten CFAR-Verfahren störenderweise als Ziele gewertet werden und einen unerwünschten Falschalarm auslösen.

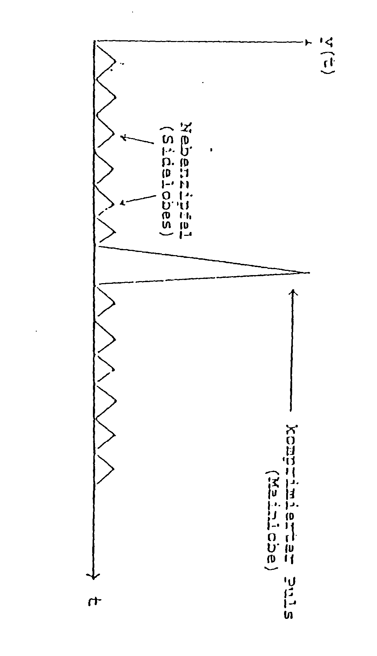

Die Figur zeigt einen Ausgangsimpuls y(t). Die Höhe der Nebenzipfel (Sidelobes) wird gekennzeichnet durch das Haupt- zu Nebenzipfel-Verhältnis (HNV) des Betrages des Ausgangsimpulses y(t). Das HNV der Autokorrelationsfunktion gemäß Gleichung (1) beträgt beispielsweise für einen 13-Barkercode 22,3 dB. Ein solches Verhältnis ist jedoch nachteiligerweise für derzeitige Radaranlagen zu klein, da häufig ein Falschalarm ausgelöst werden kann.

Aus den Druckschriften

6TH MEDITERRANEAN ELEKTROTECHNICAL CONFERENCE, Proceedings, Ljubljaba, Slovenia, 22. - 24. Mai 1991, Band 1, Seiten 480 - 483, IEEE New York, US;
A: ZEJAK et al.: "Doppler optimized sidelobe suppresion in phase-coded pulse compression radars" und
ELECTRONICS LETTERS, Band 27, Nr. 7, 28. März 1991, Seiten 558 - 560, Stevenhage, Herts, GB;
A.J. ZEJAK et al.: "Doppler optimised mismatched filters",

ist weiterhin ein Verfahren zur Auslegung von Radar-Zielerkennungs-Filtern bekannt, bei welchem die bei der Entfernungs- und Geschwindigkeitsbestimmung auftretenden Nebenzipfel unterdrückt werden. Dabei werden Mismatched-Filter verwendet, die für komplexwertige Sende-/Empfangssignale insbesondere für den Geschwindigkeitsbereich (Doppler-Bereich) optimiert sind. Dabei erfolgt die Bestimmung der Filterkoeffizienten mittels der Methode der kleinsten Quadrate.

Der Erfindung liegt die Aufgabe zugrunde, ein gattungsgemäßes Verfahren dahingehend zu verbessern, daß ein möglichst hoher Haupt-zu Nebenzipfelabstand erreicht wird und daß zusätzlich zu der Entfernung auch eine Bestimmung der Geschwindigkeit eines Zieles möglich wird.

Diese Aufgabe wird gelöst durch die im kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil der Erfindung besteht darin, daß es möglich wird, den Haupt- zu Nebenzipfelabstand auf 35 dB bis 40 dB zu steigern, wodurch die Empfindlichkeit und das Auflösungsvermögen (bezüglich des Ausgangssignales y(t)) erheblich gesteigert wird.

Ein zweiter Vorteil besteht darin, daß es möglich ist, das verwendete Mismatched Filter so zu gestalten, daß alle Nebenzipfel nahezu die gleiche Höhe haben. Dadurch kann ein nachgeschaltetes CFAR-Verfahren sehr zuverlässig auf einen niedrigen Schwellwert eingestellt werden bei einer geringen Falschalarmrate.

Ein dritter Vorteil besteht darin, daß das Verfahren sehr kostengünstig und zuverlässig einsetzbar ist.

Ein vierter Vorteil besteht darin, daß nicht nur Mismatched Filter (MMF) für Binärcodes, sondern auch für komplexwertige und somit für dopplertolerante Signale bestimmbar sind.

Die Erfindung beruht auf der Verwendung eines sogenannten Mismatched Filters (MMF). Dieses unterscheidet sich von dem eingangs erwähnten Matched Filter (MF) dadurch, daß eine andere Impulsantwort-Funktion h(t) gewählt wird. Es ist zulässig, daß die zeitliche Länge von h(t) größer wird als die zugehörige Länge des Sendesignals (im Videobereich). Damit ergibt sich bei der Faltung gemäß Gleichung (1) eine Kreuzkorrelationsfunktion (KKF), die möglicherweise eine geringe zeitliche Verbreiterung des komprimierten (Haupt-)Pulses (Mainlobe) bewirkt, bezogen auf die eingangs erwähnte Autokorrelationsfunktion (AKF).

Als Mismatched Filter (MMF) wird vorteilhafterweise ein sogenanntes Transversal-Filter verwendet, das durch zugehörige (Filter-)Koeffizienten bestimmt ist. Diese werden nach einem iterativen Verfahren ermittelt, was nachfolgend erläutert wird:

Es werden zunächst die Bedingungen (Forderungen) festgelegt, die eine Puls-Radaranlage im Videobereich erfüllen soll. Diese sind beispielsweise

- möglichst großes Haupt-zu Nebenzipfelverhältnis, z.B. 35 dB bis 40 dB

- möglichst geringe zeitliche Verbreiterung des (Haupt-)Pulse (Mainlobe) bezogen auf denjenigen eines MF

- möglichst großer Signal-zu Rauschabstand, d.h. möglichst nur geringfügig kleinerer Signal-zu Rauschabstand wie bei einem MF

- möglichst homogene Nebenzipfelstruktur, d.h. alle Nebenzipfel sollen möglichst gleich groß sein, denn dann wird die CFAR-Auswertung besonders zuverlässig.

Mit derartigen Forderungen ist im Videobereich der Ausgangsimpuls y(t) in Gleichung (1) festgelegt. Wählt man nun noch für das Sendesignal im Videobereich einen bestimmten Code, z.B. einen Binär- oder Polyphasencode, für die Intrapulsmodulation, so ist damit der Empfangsimpuls s(t) im Videobereich festgelegt.

Zur Bestimmung der (Filter-)Koeffizienten des MMF wird nun Gleichung (1) in folgende Matrixform umgeschrieben:

$$S \cdot h = y \qquad\qquad (2).$$

Dabei ist S die zu dem Empfangsimpuls s(t) gehörende Signalmatrix, h der gesuchte Koeffizienten-Vektor des MMF und y der zu dem Ausgangssignal y(t) gehörende Vektor.

Der gesuchte Koeffizienten-Vektor h kann sowohl für ein aperiodisches komplexwertiges Sendesignal (Anwendung 1) als auch für ein periodisches komplexwertiges Sendesignal (Anwendung 2) bestimmt werden.

Anwendung 1:

Für aperiodische komplexe Sendesignale, z. B. sogenannte Chirp-Impulse oder intrapulsmodulierte Sendesignale, die einen Polyphasencode enthalten, ist Gleichung (2) ein überbestimmtes lineares Gleichungssystem, das nur durch eine Näherungslösung bestimmbar ist.

Es liegt zunächst nahe, für die Berechnung eines Koeffizienten-Vektors h einen mathematischen Ansatz zu wählen, der nur die Fehlerquadratsumme minimiert gemäß der Gleichung

$$\| \; S \cdot h - \; \| \overset{!}{=} \min \qquad\qquad (2a).$$

Dabei bedeutet $\|$ das Betragszeichen und $\overset{!}{=}$ min die Forderung, den vorangestellten Term zu minimieren.

Mit dem Verfahren aus der Gleichung (2a) ist es jedoch nur möglich, die Höhe der Nebenzipfel bezüglich des (Haupt-)-Pulses insgesamt zu verringern. Es ist in nachteiliger Weise keine Homogenisierung der Höhe der Nebenzipfel möglich, so daß ein nachgeschaltetes CFAR-Verfahren nachteiligerweise eine hohe Falschalarmrate anzeigen würde. Es ist daher eine Homogeniesierung der Nebenzipfel-Struktur erforderlich, d.h., alle Nebenzipfel müssen im wesentlichen auf das gleiche Niveau (Höhe) gebracht werden. Dieses ist nur möglich, wenn jeder Nebenzipfel einzeln entsprechend korrigiert wird.

Soll nun mit einer Puls-Radaranlage ein bewegtes Ziel detektiert werden so ist es vorteilhaft, im Videobereich für die intrapulsmodulierten Sendeimpulse eine geschwindigkeitstolerante Signalform zu wählen, beispielsweise sogenannte Chirp-Impulse oder Polyphasencodes. Derartige Signalformen sind aber - mathematisch betrachtet - aperiodische komplexe Signale, die sich nur unter Zuhilfenahme eines komplexwertigen Pulskompressions-Filters komprimieren lassen, wobei aufgrund der erwähnten Forderungen für y(t) in diesem Fall ein komplexes Mismatched-Filter (MMF) vorteilhaft ist. Zur Bestimmung des Vektors h, und damit der Filter-Koeffizienten, wird, bezugnehmend auf die Gleichungen (2a), (2) folgender Ansatz gewählt:

$$\gamma \cdot ||h||^2 + \beta \cdot g^2 \overset{!}{=} \min \qquad (3a)$$

$$S \cdot h - y \leq g \cdot \varepsilon$$

$$-S \cdot h + y \leq g \cdot \varepsilon \qquad (3),$$

wobei $\beta$ und $\gamma$ reelle positive Parameter sind, die noch näher erläutert werden. Die reelle Zahl g>0 bildet zusammen mit dem Vektor $\varepsilon$ eine sogenannte Schranke, die ebenfalls noch erläutert wird.

Besteht nun das zu dem Sendesignal s(t) im Videobereich gehörende aperiodische komplexe Signal s aus n Koeffizienten gemäß den Gleichungen

$$s_{Realteil} = (s_{O,R}, s_{1,R}, \ldots\ldots, s_{n-1,R})$$

$$s_{Imaginärteil} = (s_{0,I}, s_{1,I}, \ldots\ldots, s_{n-1,I}),$$

so hat die zugehörige Signalmatrix S folgende Gestalt

$$S := \begin{Bmatrix} s_{O,R} & -s_{O,I} & 0 & 0 & 0 & \ldots\ldots\ldots & 0 \\ s_{O,I} & s_{O,R} & 0 & 0 & 0 & \ldots\ldots\ldots & 0 \\ s_{I,R} & -s_{1,I} & s_{O,R} & -s_{O,I} & 0 & \ldots\ldots\ldots & 0 \\ s_{1,I} & s_{1,R} & s_{0,I} & s_{O,R} & 0 & \ldots\ldots\ldots & 0 \\ \bullet & & & & & & \bullet \\ \bullet & & & & & & \bullet \\ \bullet & & & & & & \bullet \\ s_{n-1,R} & -s_{n-1,I} & \cdots\cdots\cdots & & & 0 & 0 \\ s_{n-1,I} & s_{n-1,R} & \cdots\cdots\cdots & & & 0 & 0 \\ 0 & 0 & & & \ldots\ldots & s_{0,R} & -s_{0,I} \\ 0 & 0 & & & \ldots\ldots & s_{0,I} & s_{0,R} \\ \bullet & \bullet & & & & & \\ \bullet & \bullet & & & & & \\ \bullet & \bullet & & & & & \\ 0 & 0 & & \ldots & 0 & s_{n-1,R} & -s_{n-1,I} \\ 0 & 0 & & \ldots & 0 & s_{n-1,I} & s_{n-1,R} \end{Bmatrix} \quad (4)$$

Die Matrix S ist vom Typ (2N,2m), wobei m die Anzahl der MMF-Koeffizienten ist (dabei kann eine beliebige Filterüberlänge gegenüber dem Signal gewählt werden, d.h. m>n) und N die Anzahl der Elemente des Ausgangsimpulses y, d.h. N=m+n-1 für aperiodische komplexe Signale.

Somit hat das gesuchte MMF h die Gestalt (2m,1)

$$h^T = (h_{0,R}, h_{0,I}, h_{1,R}, h_{1,I}, \dots\dots, h_{m-1,R}, h_{m-1,I}),$$

wobei

$$h^T_{Realteil} = (h_{0,R}, h_{1,R}, \dots\dots, h_{m-1,R}) \qquad (5)$$

$$h^T_{Imaginärteil} = (h_{0,I}, h_{1,I}, \dots\dots, h_{m-1,I})$$

gelten.

Dabei ist $h^T$ der transponierte Vektor zu dem Vektor h.

Gemäß den Gleichungen (3) entspricht einem nebenzipfelfreiem (Wunsch-) Ausgangsimpuls y(t) der dortige Vektor y. Dieser hat demnach die Form (2N, 1):

$$y^T = y_{0,R}, y_{0,I}, y_{1,R}, y_{1,I}, \dots\dots, y_{n-1,R}, y_{n-1,I}),$$

wobei

$$y^T_{Realteil} = (y_{0,R}, y_{1,R}, \dots\dots, y_{N-1,R}) \qquad (6)$$

$$y^T_{Imaginärteil} = (y_{0,I}, y_{1,I}, \dots\dots, y_{N-1,I}).$$

Dabei bedeutet das hochgestellte T jeweils den zugehörigen transponierten Vektor.

Eine der Forderungen an das pulskomprimierte Ausgangssignal y(t) war, daß bei einem MMF ein möglichst geringer Mismatch-Loss (Anpassungsverlust) gegenüber dem Matched-Filter (MF) vorhanden ist. Dieser Forderung gleichbedeutend ist in den Gleichungen (3) die Forderung, daß die Filterrauschleistung minimiert wird, daß also gilt

$$||h||^2 = h^T h \doteq \min .$$

Die andere wichtige Forderung war die nach möglichst kleinen und möglichst gleich hohen (homogenen) Nebenzipfeln, bezogen auf den Hauptpuls (Mainlobe), das heißt, gemäß Gleichungen (3) soll sich der erhaltene Ausgangsimpuls S·h von dem (Wunsch-)Ausgangsimpuls y möglichst geringfügig unterscheiden. Dieses ist gleichbedeutend mit der Forderung $g^2 \doteq \min$, wobei die reelle Zahl g>0 zusammen mit dem Vektor $\varepsilon$ die Schranke der Differenz zwischen erhaltenem und gewünschtem Ausgangsimpuls bildet. Der Vektor $\varepsilon$ ist vom Typ (2N, 1). Alle Koeffizienten von $\varepsilon$ besitzen denselben Wert, wodurch die erwähnte Homogenität (gleiche Höhe) der Nebenzipfel (Sidelobes) erreicht wird.

In den Gleichungen (3) geben die reellen positiven Parameter $\beta$ und $\gamma$ eine Wahl der Prioritäten der Forderungen $h^T h \doteq \min$ und $g^2 \doteq \min$ an. Bei Gleichberechtigung beider Forderungen (Bedingungen) gilt $\beta=\gamma=1$.

Bei dem (Wunsch-) Ausgangsimpuls y kann die zeitliche Breite des Mainlobes gewählt werden, so daß eine geringfügige Verbreiterung bezogen auf eine Matched Filterung einstellbar ist. Diese ist vorteilhaft für ein möglichst hohes Haupt- zu Nebenzipfelverhältnis, d.h., möglichst niedrige Nebenzipfel, insbesondere bei der Verwendung aperiodischer komplexer Sende- sowie Empfangssignale, wie beispielsweise Chirp oder Polyphasencodes.

Die Problemformulierung entsprechend den Gleichungen (3) ist ein quadratisches Optimierungsproblem, eine streng konvexe Kostenfunktion mit linearen Grenzen.

Bei der geforderten Minimierung mit den angegebenen Nebenbedingungen wird vorteilhafterweise die Multiplikationsregel von Carathéodory John Lagrange verwendet. Dazu wird die Lagrange-Funktion L aufgestellt, die in diesem Fall noch von zwei sogenannten Lagrange-Multiplikatoren abhängt. Es ist weiterhin zweckmäßig und vorteilhaft, diese Angelegenheit so umzuformen, daß die Lagrange-Funktion L nur noch von dem einen Lagrange-Multiplikator $\lambda$ abhängt. Dadurch wird die Lagrange-Funktion L ersetzt durch die Funktion $\Phi(\lambda)$. Es entsteht somit die folgende sogenannte duale Problemformulierung: ein h* ist genau dann eine optimale Lösung von den Gleichungen (3), wenn das zugehörige $\lambda$* die Funktion $\Phi(\lambda)$ maximiert. Dabei bedeuten h* und $\lambda$* den optimalen Filter- bzw. Lagrange-Vektor. Dabei entsteht das gesuchte optimale Mismatched-Filter, das durch den Vektor h* bestimmt ist, in Abhängigkeit des zugehörigen optimalen Lagrange-Multiplikators $\lambda$*. Es gilt also

$$h^* = h^*(\lambda^*) = -\frac{1}{2\gamma} S^T \cdot \lambda^* \qquad (7).$$

Der Faktor g ist ebenfalls von $\lambda$ abhängig gemäß der Gleichung

$$g = g(\lambda) = \frac{1}{2\beta} \varepsilon^T |\lambda| \qquad (8).$$

Das Problem gemäß den Gleichungen (3) ist daher gelöst, wenn die Funktion $\Phi(\lambda)$ maximiert ist. Dieses erfolgt nach der Methode des steilsten Anstieges. Bei diesem iterativen Verfahren wird der optimale Lagrange-Multiplikator $\lambda$* bestimmt gemäß der Gleichung

$$\lambda_{k+1} = \lambda_k + \alpha \cdot l(\lambda_k) \text{ mit } k = 1,2,3... \qquad (9),$$

wobei $\alpha$ die Schrittweite der Iteration und 1 der Fehlervektor der Iteration bedeuten.

Dabei gilt für den Fehlervektor $l_i(\lambda)$ :

$$
l_i(\lambda) = \begin{cases}
(S \cdot h)_i - y_i - g \cdot \epsilon_i & \begin{cases} \text{für } \lambda_i > 0 \\ \quad \text{oder} \\ \text{für } \lambda_i = 0 \text{ und } (Sh - y - g\epsilon)_i > 0 \end{cases} \\[4mm]
(S \cdot h)_i - y_i + g \cdot \epsilon_i & \begin{cases} \text{für } \lambda_i < 0 \\ \quad \text{oder} \\ \text{für } \lambda_i = 0 \text{ und } (Sh - y + g\epsilon)_i < 0 \end{cases} \\[4mm]
0 & \text{für } \lambda_i = 0 \text{ und } \left| (Sh - y)_i \right| \leq g \cdot \epsilon_i
\end{cases} \qquad (10)
$$

Dieses iterative Verfahren konvergiert, wenn in der Gleichung (9) für die Schrittweite $\alpha$ die folgende Bedingung eingehalten wird:

$$\alpha < \frac{2\gamma}{\|S\|^2} \qquad (11),$$

wobei

$$\|s\| := \sup_{x \neq 0} \frac{\|sx\|}{\|x\|}$$

die Matrixnorm der Matrix S ist.

Durch diese iterative Maximierung der Funktion $\Phi$ entsteht der optimale Lagrange-Vektor $\lambda^*$ und somit aus der Gleichung (7) der zugehörige optimale Vektor h*, welcher die optimalen Filterkoeffizienten enthält, für das gesuchte Mismatched-Filter, das optimal an die gestellten Forderungen angepaßt ist.

Wird beispielsweise für das aperiodische komplexe Sendesignal als Polyphasencode ein 25er Frank-Code (Kompressionsfaktor 25) gewählt, und eine zeitliche Verbreiterung des (Haupt-) Ausgangsimpulses (Mainlobe) von 50 % zugelassen, so ist bei einem 64-stufigen Mismatched-Filter ein Hauptzu-Nebenzipfelverhältnis von 43,8 dB erreichbar. Dabei unterscheiden sich die Höhe der Nebenzipfel lediglich um maximal 4 dB, d.h., diese besitzen eine ausreichend gute homogene Struktur für ein beispielhaft anwendbares CFAR-Verfahren zur sicheren Zielerkennung.

Anwendung 2:

Für periodische komplexe Sendesignale, z. B. periodische Binärcodes oder aperiodische Polyphasencodes, wird die Bestimmung des gesuchten Koeffizienten-Vektors h aus der Gleichung (2) vorteilhafterweise wesentlich vereinfacht gegenüber der vorstehend beschriebenen Anwendung 1. Dieses wird nachfolgend näher erläutert:

Bezeichnet

$$s^T_{\text{Realteil}} = (s_{0,R},\, s_{1,R},\, s_{2,R},\, ....,\, s_{N-1,R}) \tag{12}$$

$$s^T_{\text{Imaginärteil}} = (s_{0,I},\, s_{1,I},\, s_{2,I},\, ....,\, s_{N-1,I})$$

ein Codewort des periodischen komplexen Signals s, bestehend aus N Subpulsen, so ist die Signalmatrix S, Gleichung (2), vom Typ (2N, 2N) und hat die Gestalt

$$S := \begin{bmatrix} s_{0,R} & -s_{0,I} & s_{1,R} & -s_{1,I} & \cdots & s_{N-1,R} & -s_{N-1,I} \\ s_{0,I} & s_{0,R} & s_{1,I} & s_{1,R} & \cdots & s_{N-1,I} & s_{N-1,R} \\ s_{N-1,R} & -s_{N-1,I} & s_{0,R} & -s_{0,I} & \cdots & s_{N-2,R} & -s_{N-2,I} \\ s_{N-1,I} & s_{N-1,R} & s_{0,I} & s_{0,R} & \cdots & s_{N-2,I} & s_{N-2,R} \\ \vdots & \vdots & \vdots & \vdots & & \vdots & \vdots \\ s_{1,R} & -s_{1,I} & s_{2,R} & -s_{2,I} & \cdots & s_{0,R} & -s_{0,I} \\ s_{1,I} & s_{1,R} & s_{2,I} & s_{2,R} & \cdots & s_{0,I} & s_{0,R} \end{bmatrix} \tag{13}$$

Der gesuchte Filter-Koeffizient h ist vom Typ (2N,1) gemäß

$$h^T = (h_{0,R},\, h_{0,I},\, h_{1,R},\, h_{1,I},\, ....,\, h_{N-1,R},\, h_{N-1,I}) \tag{14}$$

wobei

$$h^T_{\text{Realteil}} = (h_{0,R},\, h_{1,R},\, ....,\, h_{N-1,R})$$

$$h^T_{\text{Imaginärteil}} = (h_{0,I},\, h_{1,I},\, ....,\, h_{N-1,I}).$$

Dies bedeutet, daß die Pulskompressions-Filterlänge des MMF-Filters gleich der Signal-Codewortlänge = N ist. Das (Wunsch-)Ausgangssignal y ist dann ebenfalls vom Typ (2N,1) und wird vorteilhafterweise nebenzipfelfrei

angesetzt als

$$y^T = (1, 0, 0, 0, ......., 0) , \qquad (15)$$

wobei

$$y^T_{Realteil} = (1, 0, ....., 0)$$

$$y^T_{Imaginärteil} = (0, 0, ....., 0)$$

bedeuten.

Während das lineare Gleichungssystem entsprechend Gleichung (2) für den aperiodischen Fall (Anwendung 1) überbestimmt ist und daher nur Näherungslösungen existieren, ist das lineare Gleichungssystem entsprechend Gleichung (2) für den periodischen Fall vorteilhafterweise von quadratischer Form, d. h., es besteht aus 2N linearen Gleichungen mit 2N Unbekannten von h, und somit existiert eine eindeutige Lösung

$$h = S^{-1} y \qquad (16)$$

der Gleichung (2) genau dann, wenn die Signalmatrix S regulär ist.

Die Bildung der inversen Matrix $S^{-1}$ zu der Matrix S ist vorteilhafterweise mögich für Puls-Radar-Signale, so daß auch eine eindeutige Bestimmung des Filter-Koeffizienten h gemäß Gleichung (16) für ein periodisches komplexes Sendesignal möglich wird. Für letzteres wird beispielsweise ein periodischer Polyphasencode verwendet. Damit ist an sich ein nebenzipfelfreies Ausgangssignal y entsprechend Gleichung (15) erreichbar, z. B. ein Haupt-zu-Nebenzipfel-Verhältnis (HNV), der wesentlich größer als 40 dB ist. Damit ist vorteilhafterweise eine zuverlässige Signalauswertung bei einer sehr geringen Falschalarmrate (CFAR) möglich. Dabei ergibt sich keine Verbreiterung des Hauptpulses (Mainlobe) im Videobereich.

**Patentansprüche**

1. Verfahren zur Erkennung eines Zieles mit Hilfe einer Radaranlage, wobei

   - ein intrapulsmoduliertes komplexes Sendesignal verwendet wird,
   - aus dem zugehörigem reflektierten Empfangssignal im Videobereich mittels eines komplexen Mismatched-Filters ein pulskomprimierter Ausgangsimpuls erzeugt wird, <u>dadurch gekennzeichnet,</u>
   - daß ein Transversal-Filter als Mismatched-Filter gewählt wird,
   - daß zur Bestimmung der Filterkoeffizienten des Transversal-Filters zunächst der benutzte Sendeimpuls, das gewünschte Haupt-zu Nebenzipfelverhältnis des Ausgangsimpulses, die Homogenität der Nebenzipfel sowie eine vorgebbare zeitliche Breite des Hauptimpulses des Ausgangsimpulses gewählt werden, und
   - daß mit diesen Vorgaben bei einem aperiodischem komplexen Sendesignal die Filterkoeffizienten des Mismatched-Filters bestimmt werden aus den Formeln

$$\gamma \cdot ||h||^2 + \beta \cdot g^2 \overset{!}{=} \min$$

und

$$S \cdot h - y \leq g \cdot \varepsilon,$$

$$- S \cdot h + y \leq g \cdot \varepsilon,$$

wobei

| | |
|---|---|
| h | einen das Mismatched-Filter bestimmenden Vektor, welcher die Filterkoeffizienten enthält, |
| S | eine das aperiodische komplexe Sendesignal bestimmende Signalmatrix, |
| y | ein dem komprimierten Ausgangssignal entsprechender Vektor, |
| $\beta, \gamma$ | reelle positive Parameter, |
| g | eine reelle Zahl größer Null, |
| $\varepsilon$ | einen Schranken-Vektor, |
| ‖ | das Betragszeichen und |
| $\stackrel{!}{=}$ min | die Forderung, den vorangestellten Term zu minimieren |

bedeuten.

2.  Verfahren nach Anspruch 1, dadurch gekennzeichnet, daß bei einem aperiodischen komplexen Sendesignal die Filter-koeffizienten mit der Multiplikatorenregel von Lagrange bestimmt werden.

3.  Verfahren nach Anspruch 1 oder Anspruch 2, dadurch gekennzeichnet, daß bei einem aperiodischen komplexen Sendesignal eine Lagrange-Funktion gebildet wird, die lediglich von einem Lagrange-Multiplikator ($\lambda$) abhängt.

4.  Verfahren nach einem der vorherigen Ansprüche, dadurch gekennzeichnet, daß bei einem aperiodischen komplexen Sendesignal die Lagrange-Funktion maximiert wird.

5.  Verfahren nach einem der vorherigen Ansprüche, dadurch gekennzeichnet, daß bei einem aperiodischen komplexen Sendesignal die Maximierung der Lagrange-Funktion mit Hilfe der Methode des steilsten Anstiegs erreicht wird.

6.  Verfahren nach einem der vorherigen Ansprüche, dadurch gekennzeichnet, daß bei einem aperiodischen komplexen Sendesignal bei der Maximierung der Lagrange-Funktion ein maximaler Lagrange-Multiplikator ($\lambda^*$) gebildet wird und daß daraus die Filterkoeffizienten bestimmt werden.

7.  Verfahren zur Erkennung eines Zieles mit Hilfe einer Radaranlage, wobei

    - ein intrapulsmoduliertes komplexes Sendesignal verwendet wird,
    - aus dem zugehörigem reflektierten Empfangssignal im Videobereich mittels eines komplexen Mismatched-Filters ein pulskomprimierter Ausgangsimpuls erzeugt wird, <u>dadurch gekennzeichnet,</u>
    - daß ein Transversal-Filter als Mismatched-Filter gewählt wird,
    - daß zur Bestimmung der Filterkoeffizienten des Transversal-Filters zunächst der benutzte Sendeimpuls, das gewünschte Haupt-zu Nebenzipfelverhältnis des Ausgangsimpulses, die Homogenität der Nebenzipfel sowie eine vorgebbare zeitliche Breite des Hauptimpulses des Ausgangsimpulses gewählt werden, und
    - daß mit diesen Vorgaben bei einem periodischem komplexen Sendesignal eine zu diesem gehörende inverse Matrix $S^{-1}$ gebildet wird und daß damit die das Mismatched-Filter (MMF) bestimmenden Filter-Koeffizienten h bestimmt werden gemäß der Formel

$$h = S^{-1} \cdot y \, ,$$

    wobei

| | |
|---|---|
| h | einen das Mismatched-Filter bestimmenden Vektor, welcher die Filterkoeffizienten enthält und |
| y | ein dem komprimierten Ausgangssignal entsprechender Vektor, |

    bedeuten.

8.  Verfahren nach Anspruch 7, dadurch gekennzeichnet, daß als Sendesignal ein komplexer Polyphasencode verwendet wird.

## Claims

1. Method for the recognition of a target with the aid of a radar installation, wherein

   - an intrapulse-modulated complex transmitted signal is used and
   - a pulse-compressed output pulse is produced from the associated reflected received signal in the video range by means of a complex mismatched filter, characterised thereby,
   - that a transverse filter is chosen as mismatched filter,
   - that the utilised transmitted pulse, the desired ratio of main lobe to side lobe of the output pulse, the homogeneity of the side lobes as well as a presettable time width of the main lobe of the output pulse are chosen initially for the determination of the filter co-efficients of the transverse filter and
   - that the filter co-efficients of the mismatched filter are determined for an aperiodic complex transmitted signal with these preconditions from the formulae

$$\gamma \cdot ||h||^2 + \beta \cdot g^2 \overset{!}{=} \min$$

   and

$$S \cdot h - y \leq g \cdot \varepsilon,$$

$$- S \cdot b + y \leq g \cdot \varepsilon,$$

   wherein

   | | |
   |---|---|
   | h | signifies a vector containing the filter co-efficients and determining the mismatched filter, |
   | s | signifies a signal matrix determining the aperiodic complex transmitted signal |
   | y | signifies a vector corresponding to the compressed output signal, |
   | $\beta$ and $\gamma$ | signify real positive parameters, |
   | g | signifies a real number greater than zero, |
   | $\varepsilon$ | signifies a boundary vector, |
   | $\|$ | signifies the amplitude sign and |
   | $\overset{!}{=}$ | signifies the requirement to minimise the preceding term. |

2. Method according to claim 1, characterised thereby, that in the case of an aperiodic complex transmitted signal, the filter co-efficients are determined by the multiplier rule of Lagrange.

3. Method according to claim 1 or 2, characterised thereby, that in the case of an aperiodic complex transmitted signal, a Lagrange function is formed, which depends merely on a Lagrange multiplier ($\lambda$).

4. Method according to one of the preceding claims, characterised thereby, that in the case of an aperiodic complex transmitted signal, the Lagrange function is maximised.

5. Method according to one of the preceding claims, characterised thereby, that in the case of an aperiodic complex transmitted signal, the maximisation of the Lagrange function is obtained with the aid of the method of the steepest rise.

6. Method according to one of the preceding claims, characterised thereby, that in the case of an aperiodic complex transmitted signal, a maximum Lagrange multiplier ($\lambda^*$) is formed for the maximisation of the Lagrange function and that the filter co-efficients are determined therefrom.

7. Method for the recognition of a target with the aid of a radar installation, wherein

   - an intrapulse-modulated complex transmitted signal is used and
   - a pulse-compressed output pulse is produced from the associated reflected received signal in the video range by means of a complex mismatched filter, characterised thereby,

- that a transverse filter is chosen as mismatched filter,
- that the utilised transmitted pulse, the desired ratio of main lobe to side lobe of the output pulse, the homogeneity of the side lobes as well as a presettable time width of the main lobe of the output pulse are chosen initially for the determination of the filter co-efficients of the transverse filter and
- that in the case of an aperiodic complex transmitted signal, an inverse matrix $S^{-1}$ belonging thereto is formed with these preconditions and that the filter co-efficients h determining the mismatched filter (MMF) are determined therewith according to the formula

$$h = s^{-1} \cdot y,$$

wherein

h signifies a vector containing the filter co-efficients and determining the mismatched filter and
y signifies a vector corresponding to the compressed output signal.

8. Method according to claim 7, characterised thereby, that a complex polyphase code is used as transmitted signal.

**Revendications**

1. Procédé pour reconnaître une cible à l'aide d'une installation radar, dans lequel :

- on utilise un signal d'émission complexe modulé par impulsion interne,
- on génère une impulsion de sortie comprimée à partir du signal de réception réfléchi associé dans la plage vidéo au moyen d'un filtre non-accordé complexe,

caractérisé en ce que :

- on choisit un filtre transversal comme filtre non-accordé,
- pour déterminer les coefficients du filtre transversal, on choisit tout d'abord l'impulsion d'émission utilisée, le rapport désiré lobe principal/ lobe secondaire de l'impulsion de sortie, l'homogénéité des lobes secondaires ainsi qu'une largeur temporelle prédéterminée de l'impulsion principale de l'impulsion de sortie, et
- on détermine à partir de ces indications, dans un signal d'émission complexe apériodique, les coefficients du filtre non-accordé à partir des formules

$$\gamma \cdot || h ||^2 + \beta \cdot g^2 \overset{!}{=} \min$$

et

$$S \cdot h - y \le g \cdot \varepsilon,$$

$$- S \cdot h + y \le g \cdot \varepsilon$$

dans lesquelles :

h signifie un vecteur déterminant le filtre non-accordé, qui contient les coefficients de filtre,
S représente une matrice de signal déterminant le signal d'émission complexe apériodique,
y est un vecteur correspondant au signal de sortie comprimé,
$\beta, \gamma$ sont des paramètres réels positifs,
g un chiffre réel supérieur à zéro,
$\varepsilon$ signifie un vecteur de barrière
‖ représente le signe de valeur, et

$\overset{!}{=}$ min signifie l'exigence de minimiser le terme précédent.

2. Procédé selon la revendication 1, caractérisé en ce que dans un signal d'émission complexe apériodique, les coefficients de filtre sont déterminés avec la règle des multiplicateurs de Lagrange.

3. Procédé selon l'une ou l'autre des revendications 1 et 2, caractérisé en ce que dans un signal d'émission complexe apériodique, on forme une fonction de Lagrange qui dépend uniquement d'un multiplicateur de Lagrange ($\lambda$).

4. Procédé selon l'une quelconque des revendications précédentes, caractérisé en ce que dans un signal d'émission complexe apériodique, la fonction de Lagrange est maximisée.

5. Procédé selon l'une quelconque des revendications précédentes, caractérisé en ce que dans un signal d'émission complexe apériodique, la maximisation de la fonction de Lagrange est obtenue à l'aide de la méthode de la plus forte croissance.

6. Procédé selon l'une quelconque des revendications précédentes, caractérisé en ce que dans un signal d'émission complexe apériodique, lors de la maximisation de la fonction de Lagrange, on forme un multiplicateur de Lagrange maximum ($\lambda^*$), et en ce que l'on détermine à partir de celui-ci les coefficients de filtre.

7. Procédé pour reconnaître une cible à l'aide d'une installation de radar, dans lequel :

   - on utilise un signal d'émission complexe modulé par impulsion interne,
   - on génère une impulsion de sortie comprimée à partir du signal de réception réfléchi associé dans la plage vidéo au moyen d'un filtre non-accordé complexe,

   caractérisé en ce que :

   - on choisit un filtre transversal comme filtre non-accordé,
   - pour déterminer les coefficients du filtre transversal, on choisit tout d'abord l'impulsion d'émission utilisée, le rapport désiré lobe principal/ lobe secondaire de l'impulsion de sortie, l'homogénéité des lobes secondaires ainsi qu'une largeur temporelle prédéterminée de l'impulsion principale de l'impulsion de sortie, et en ce que :
   - on détermine à partir de ces indications, dans un signal d'émission complexe périodique, une matrice inverse $S^{-1}$ appartenant à celui-ci, et en ce que l'on détermine avec celle-ci les coefficients de filtre h déterminant le filtre non-accordé (MMF), selon la formule :

$$h = S^{-1} \cdot y,$$

   dans laquelle :

   h signifie un vecteur déterminant le filtre non-accordé, qui contient les coefficients de filtre, et
   y est un vecteur correspondant au signal de sortie comprimé.

8. Procédé selon la revendication 7, caractérisé en ce que l'on utilise comme signal d'émission un code polyphasé complexe.